(19)

Europäisches Patentamt

European Patent Office

Office européen des brevets

(11) **EP 4 273 068 B1**

(12) **EUROPEAN PATENT SPECIFICATION**

(45) Date of publication and mention
of the grant of the patent:
**27.05.2026 Bulletin 2026/22**

(21) Application number: **21915811.0**

(22) Date of filing: **29.12.2021**

(51) International Patent Classification (IPC):
**B65D 81/18** (2006.01)      **H01M 50/20** (2021.01)
**H01M 10/052** (2010.01)

(52) Cooperative Patent Classification (CPC):
**H01M 50/20; H01M 50/24;** H01M 10/052;
Y02E 60/10

(86) International application number:
**PCT/KR2021/020123**

(87) International publication number:
**WO 2022/146013 (07.07.2022 Gazette 2022/27)**

(54) **STORAGE DEVICE AND METHOD FOR SAFE TRANSPORT OF WASTE SECONDARY BATTERY**

SPEICHERVORRICHTUNG UND VERFAHREN ZUM SICHEREN TRANSPORT EINER
ABFALLSEKUNDÄRBATTERIE

DISPOSITIF DE STOCKAGE ET PROCÉDÉ DE TRANSPORT SÛR DE BATTERIE SECONDAIRE
USAGÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2020 KR 20200187698**

(43) Date of publication of application:
**08.11.2023 Bulletin 2023/45**

(73) Proprietor: **RD Solution Co., Ltd.
Jeollabuk-do 55365 (KR)**

(72) Inventors:
• **SOHN, Il
Seoul 03615 (KR)**

• **KWON, Oh Sung
Seoul 03782 (KR)**

(74) Representative: **Hannke Bittner & Partner mbB
Regensburg
Prüfeninger Straße 1
93049 Regensburg (DE)**

(56) References cited:
JP-A- 2010 086 885      JP-A- 2010 086 885
KR-A- 20100 049 443      KR-A- 20100 049 443
KR-A- 20170 039 144      KR-A- 20170 039 144
KR-B1- 102 250 245      KR-Y1- 200 318 529
KR-Y1- 200 318 529      US-A1- 2007 077 463

## EP 4 273 068 B1

**Description**

**Technical Field**

The present disclosure relates to a device and a method for storing a waste secondary battery and, more particularly, to a storage device and a method for safe transport of a waste secondary battery.

**Background Art**

Secondary batteries are widely used around the world in personal transportation devices including electric vehicles, electronic devices, and large-capacity energy storage systems (ESS) . In general, a secondary battery is composed of a lithium-based cathode material and a carbon-based anode material, and consists of a liquid electrolyte that promotes the movement of charges. In a situation where the demand for secondary batteries is continuously increasing, and as the performance of secondary batteries deteriorates due to repetitive rapid charging and discharging, it is necessary to recycle secondary battery parts as resources when they reach the end of their useful life. Yet, since explosion and fire may occur during road transport after battery parts are separated, there is a need for a storage device and a method for safely transporting waste secondary batteries.

The transit of lithium-ion secondary batteries is subject to UN3480 lithium-ion battery international maritime dangerous goods regulations, and the lithium-ion secondary batteries should be properly packaged in accordance with special provision 377 and related instruction LP904. However, these regulations merely suggest methods for preventing physical damage to secondary batteries, while methods for suppressing fire or explosion are not suggested. Moreover, although steel, aluminum, metal, etc. have been proposed as containers to prevent such physical damage, if a battery is stored in a container made of such materials, in case the battery itself catches fire, metal combustion may occur explosively, which may lead to a large fire.

Document KR 20170039144A discloses a storage device for a lithium-ion waste secondary battery according to the preamble of claim 1.

Accordingly, there is a need for a storage device and a method for preventing not only physical damage to a battery but also fire triggered by the battery.

**Disclosure**

**Technical Problem**

The present disclosure has been made keeping in mind the problems occurring in the related art. An objective of the present disclosure is to provide a storage device for a lithium-ion waste secondary battery for safely transporting discarded lithium-ion secondary batteries and suppressing fire or explosion that may occur during transport of lithium-ion waste secondary batteries.

In addition, an objective of the present disclosure is to provide a method having the above-mentioned advantages for safely transporting lithium-ion waste secondary batteries.

**Technical Solution**

In order to achieve the above mentioned objective, according to an aspect of the present disclosure, there is provided a storage device 100 for a lithium-ion waste secondary battery, including: a main body part 10 made of a silicone-based material, the main body part having an opening 11 on at least one side thereof and including a space portion 12 in which contents may be accommodated;

an opening and closing part 20 configured to open and close the opening 11 of the main body part 10;
a one-way valve 30 installed on at least one surface of the main body part 10 to discharge internal gas to the outside and prevent external gas from flowing inside;
dry ice 50; and
a dry ice storage part 60 configured to store the dry ice 50, the dry ice storage part 60 being made of a porous and flame-retardant material.

According to an embodiment of the present disclosure, the main body part 10 made of a silicone-based material may be made of a flame-retardant soft or hard material made using a silicone resin or a copolymer of a silicone resin and another synthetic resin.

According to another embodiment of the present disclosure, the opening and closing part 20 may be installed to an end of the opening 11 or may be spaced apart from the end of the opening 11 by a predetermined distance to be installed on the main body part 10.

According to another embodiment of the present disclosure, the opening and closing part 20 may be a zipper.

According to another embodiment of the present disclosure, the one-way valve 30 may be installed on the surface of the main body part 10 at a position that does not come into contact with the dry ice storage part 60.

According to another embodiment of the present disclosure, the dry ice storage part 60 may be separately put into the space portion 12 of the main body part 10 independently of the main body part 10, or may be installed on an inner surface of the main body part 10.

According to another embodiment of the present disclosure, the one-way valve 30 may be positioned in an upper region of the main body part 10 while the dry ice storage part 60 may be positioned in a lower region of the main body part 10.

According to another embodiment of the present disclosure, the dry ice storage part 60 may include at least one flame-retardant fiber selected from meta-aramid and para-aramid fibers.

According to another aspect of the present disclosure, there is provided a method for storing and transporting a lithium-ion waste secondary battery, including: preparing the storage device for a lithium-ion waste secondary battery according to claim 1; inserting a lithium-ion waste secondary battery into the storage device; and locking the opening and closing part of the storage device.

According to an embodiment of the present disclosure, the method may further include: calculating an appropriate amount of dry ice according to travel time on the basis of a weight loss rate of dry ice over time.

According to another embodiment of the present disclosure, method may further include: putting the storage device 100 for a lithium-ion waste secondary battery, in which a lithium-ion waste secondary battery is inserted and the opening and closing part thereof is locked, into a hard case storage box 70.

## Advantageous Effects

In a storage device for a lithium-ion waste secondary battery according to the present disclosure, due to dry ice contained in a main body part made of a silicone-based material, the partial pressure of $CO_2$ is significantly increased to induce oxygen deficiency and significantly reduce the possibility of ignition, while the temperature drops due to sublimation of the dry ice, which slows down the diffusion rate of lithium ions in a secondary battery, so that a chemical reaction can be additionally suppressed. In addition, when the storage device is stored in an additional hard case, the possibility of ignition due to physical damage can be further suppressed, thereby suppressing not only fire in a waste secondary battery, which was limited only to physical damage, but also fire and explosion caused by a chemical reaction. Furthermore, according to the present disclosure, a method having the above-mentioned advantages for safely transporting waste lithium-ion secondary batteries can be provided.

## Description of Drawings

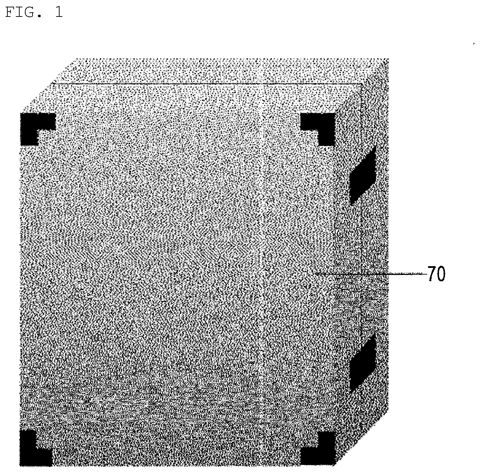

FIG. 1 is a perspective view showing a conventional storage device for a lithium-ion waste secondary battery and a hard case storage box 70 according to the present disclosure;

FIG. 2 is a cross-sectional view showing a storage device for a lithium-ion waste secondary battery 100 according to an aspect of the present disclosure into which a lithium-ion waste secondary battery 40 and dry ice 50 are input;

FIG. 3 is a perspective view showing the storage device for a lithium-ion waste secondary battery 100 according to the aspect of the present disclosure before inputting a dry ice storage part 60 containing the waste secondary battery 40 and the dry ice 50;

FIG. 4 is a flowchart of a method for storing and transporting a lithium-ion waste secondary battery according to the aspect of the present disclosure;

FIG. 5 is a graph showing the volume of gas generated by sublimation of dry ice according to the mass of dry ice at temperatures of 273 K and 298 K, which is measured by using the storage device 100 manufactured according to an embodiment of the present disclosure; and

FIGS. 6a and 6b are results shown in a graph by measuring the weight change rate of dry ice at room temperature (FIG. 6a) and the temperature change inside the storage device 100 (FIG. 6b).

## Best Mode

Hereinafter, the present disclosure will be described in detail.

The embodiments of the present disclosure are provided to more completely explain the present disclosure to those skilled in the art, and the following embodiments may be modified in many different forms, and the scope of the present disclosure is not limited to the following embodiments. Rather, these embodiments are provided so that the present disclosure will be thorough and complete, and will fully convey the substance of the present disclosure to those skilled in the art.

Like symbols designate like elements in the drawings. In addition, as used herein, the term "and/or" includes any one and all combinations of one or more of the listed items.

Terms used in this specification are used to describe the embodiments, and are not intended to limit the scope of the present disclosure. In addition, as used herein, the singular form may include the plural form unless the context clearly indicates otherwise. Furthermore, as used herein, "comprise" and/or "comprising" specify the presence of the recited shapes, numbers, steps, operations, members, elements, and/or groups thereof, but do not exclude the presence or addition of one or more other shapes, numbers, steps, operations, members, elements, and/or groups thereof.

As used herein, reference to a layer formed "on" a substrate or other layer refers to a layer formed directly on the substrate or other layer, or to an intermediate layer formed on or a layer formed on intermediate layers formed on the substrate or other layer. In addition, to those skilled in the art, a structure or shape disposed "adjacent" to another shape may have a portion overlapping or underlying the adjacent shape.

As used herein, relative terms such as "below", "above", "upper", "lower", "horizontal" or "vertical" may be used to describe the relationship that one component, layer or region has with another component, layer or region, as shown in the drawings. It should be understood that these terms cover not only the directions indicated in the drawings, but also other orientations of the device.

In the following, embodiments of the present disclosure will be described with reference to drawings schematically showing ideal embodiments (and intermediate structures) of the present disclosure. In the drawings, the size and shape of components, for example, may be exaggerated for convenience and clarity of explanation, and variations of the illustrated shapes may be expected in actual implementation. Thus, the embodiments of the present disclosure should not be construed as being limited to the specific shape shown herein. In addition, reference numerals of components in the drawings refer to the same components throughout the drawings.

As described in the related art, conventional safe transport method of lithium-ion waste secondary batteries only serves to prevent fire or explosion due to physical damage by storing the batteries in a hard case storage box 70 as shown in FIG. 7. However, since separated individual waste lithium-ion secondary batteries are already damaged or not fully discharged, there is a possibility of fire due to short circuit produced by electrochemical reaction, and thus, it is necessary to additionally secure a method and device capable of, aside from preventing fire due to physical damage, minimizing the combustion reaction to lower the possibility of fire or explosion during transport of waste secondary batteries. Accordingly, the present disclosure provides a method and device capable of economically and safely transporting a waste lithium-ion secondary battery in consideration of the problems of the conventional transport method.

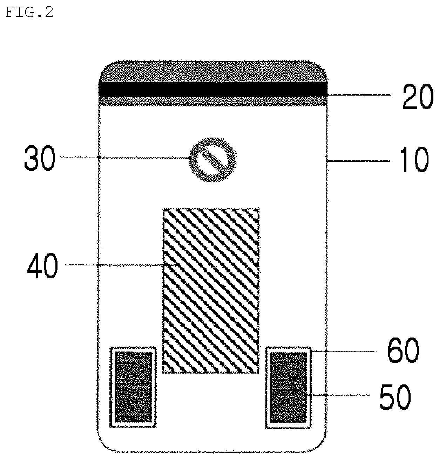

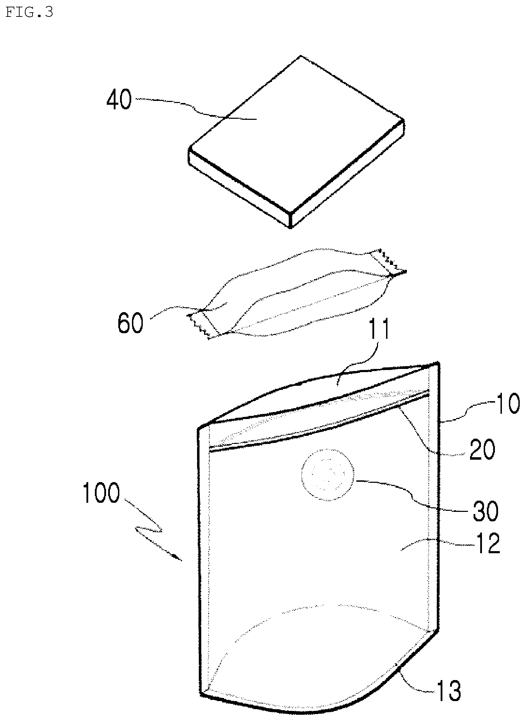

Hereinafter, a storage device 100 for a lithium-ion waste secondary battery according to an embodiment of the present disclosure will be described with reference to FIGS. 2 and 3.

The storage device 100 for a lithium-ion waste secondary battery according to the present disclosure includes a main body part 10 made of a silicone-based material that blocks the inside from an external gas atmosphere or environment, and the main body part 10 has an opening 11 on at least one side thereof and a space portion 12 in which contents may be accommodated. If necessary, the main body part 10 may further include a bottom portion 13 at a position opposite to the opening 11. Like the opening 11, the bottom portion 13 may seal the main body part by being in close contact with the entire perimeter of the main body part, and in some cases, when folding the storage device 100, it is folded inward or outward whereas when placing the storage device 100, the bottom surface thereof may be three-dimensional to have a floor surface of a certain shape so as to be able to stand on the floor.

The main body part 10 may be made of a silicone-based material. The material of the silicone-based material is not particularly limited as long as it is a material whose inherent properties are kept relatively constant at low and high temperatures, and a material that is difficult to combust, that is flexible and soft, or stiff and hard. For example, the silicone-based material may be prepared using a silicone resin or copolymer of a silicone resin and another synthetic resin, and may be prepared by further adding additives such as flame retardants and reinforcing silica.

The storage device 100 also includes: an opening and closing part 20 for opening and closing the main body part 10 so that external gas does not permeate and internal oxygen deficiency is maintained; and a one-way valve 30 for preventing the formation of high pressure in an inner container.

According to an embodiment of the present disclosure, the opening and closing part 20 may be installed to the end of the opening 11 or may be installed on the main body part 10 by being spaced apart from the end of the opening 11 by a predetermined distance. The opening and closing part 20 may be installed along the entire perimeter of the main body part or may be installed only on a part of the perimeter. According to another embodiment of the present disclosure, the opening and closing part 20 may be a zipper. As another example, the opening and closing part 20 may be a cover.

According to another embodiment of the present disclosure, the one-way valve 30 may be installed on one surface of the main body part 10 at a position not in contact with a dry ice storage part 60. The one-way valve 30 is to prevent damage such as bursting of the storage device as carbon dioxide generated by the sublimation of dry ice accumulates inside the storage device, and due to the internal carbon dioxide pressure, the storage device expands and this expansion causes the storage device to burst. The one-way valve 30 may be one, but depending on the capacity of the storage device 100, two or more may be installed. In order for the one-way valve 30 to easily discharge internal gas such as carbon dioxide to the outside, it is preferable to position the storage device 100 such that the one-way valve 30 faces upward when transporting the storage device. For example, the one-way valve 30 may be positioned at the center of the upper region of the main body part 10 or at the edge of the upper region, and the storage device 100 may be placed upright and transferred so that the upper region of the main body part 10 faces upward.

According to an embodiment of the present disclosure, the dry ice storage part 60 may be separately inserted into the space portion 12 of the main body part 10 independently of the main body part 10 or attached and installed on the inner surface of the main body part 10.

According to an embodiment of the present disclosure, the one-way valve 30 may be positioned in the upper region of the main body part 10 while the dry ice storage part 60 may be positioned in the lower region of the main body part 10. In addition, the dry ice storage part 60 may be positioned near one end of the main body part 10 so as not to contact the waste secondary battery 40 that is input as much as possible.

Meanwhile, the dry ice storage part 60 is to prevent the dry ice 50 from directly contacting the waste secondary battery 40, and may be a cloth covering the dry ice or a pouch type container according to the embodiment of the present disclosure. When an appropriate amount of dry ice 50 is put into the storage part 60 and the storage device 100 is closed, internal oxygen is diluted with $CO_2$ generated by dry ice sublimation to suppress electrochemical combustion of the secondary battery. In another example, the role of the dry ice 50 is to significantly lower the temperature inside the storage device compared to the ambient temperature, and the dry ice 50 has an additional function of lowering the risk of fire and explosion of a lithium-ion waste secondary battery by lowering driving force of mass transfer for a reaction by significantly increasing the ion diffusion rate, ion conductivity and resistance of ionic conduction in electrolytes at low temperatures.

According to another embodiment of the present disclosure, the dry ice storage part 60 may include at least one flame retardant fiber selected from meta-aramid and para-aramid fibers. The dry ice storage part 60 may be manufactured using a blend of two or more types of fibers. To be specific, the dry ice storage part 60 may be a woven or non-woven fabric containing meta-aramids and/or para-aramids. Examples of para-aramid fibers include Kevlar® and Technora®. Meta-aramid fibers include Nomex® and Conex®. The dry ice storage part 60 may be manufactured to be porous because the dry ice storage part 60 needs to be breathable so that generated carbon dioxide can be discharged.

## Mode for Invention

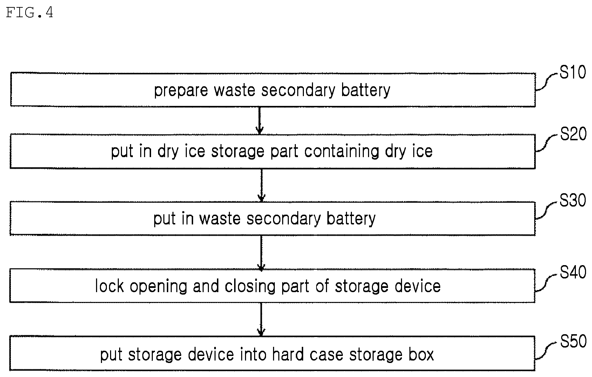

Next, a method for storing and transporting a lithium-ion waste secondary battery according to an aspect of the present disclosure will be described with reference to FIG. 4.

Referring to FIG. 4, the method for storing and transporting according to the present disclosure may include: preparing a lithium-ion waste secondary battery 40 (step S10); putting a dry ice storage part 60 containing dry ice 50 into a space portion 12 of a main body part 10 or into the dry ice accommodation part (not shown) on the inner surface of the main body part 10 (step S20); putting the lithium-ion waste secondary battery 40 into the space portion 12 of the main body part 10 or into the waste secondary battery accommodation part (not shown) on the inner surface of the main body part 10 (step S30); locking an opening and closing part 20 of a storage device 100 (step S40); and putting the storage device 100 into a hard case storage box 70 (step S50).

In addition, although not shown in FIG. 4, the method for storing and transporting according to the present disclosure may further include: transporting the storage device 100 or the hard case storage box 70 containing the storage device 100 to a destination. At this time, the hard case storage box 70 may be made of highly durable aluminum (Al) or steel material to prevent physical damage to the battery. In principle, the hard case storage box 70 should meet the requirements set out in the UN standard UN3480 lithium-ion battery international maritime dangerous goods regulations, as well as special provision 377 and related instruction LP904 for international transport.

In addition, according to one embodiment, in FIG. 4, the order of steps S20 and S30 may be reversed so that step S30 is performed first and then step S20 is performed.

Dry ice is used to lower the oxygen partial pressure and temperature in a container, and the sublimation rate of dry ice is approximately 102 g/h (1.7 g/min) as a result of preliminary experiments at room temperature.

According to one embodiment, after determining the amount of dry ice according to the volume of the storage device, the dry ice may be input. This input step may be a step of mixing about 2.7 g or more of dry ice using the ideal gas equation at an absolute temperature of 298 K, which is a room temperature condition, since the molar mass of dry ice (solid carbon dioxide) is 44 g/mol relative to the volume of 1.5 L of the sealed storage device. Due to the dry ice, the temperature inside the container is lowered, thereby slowing down the diffusion rate of lithium ions and reducing the possibility of combustion reaction. To be specific, according to one embodiment, in determining the proper amount of dry ice 50, it is put into the flame-retardant porous storage part 60 using the ideal gas equation according to the ambient temperature below.

The ideal gas equation according to the temperature is as shown in [Equation 1] below.

[Equation 1]

$$m = \frac{P \times V \times MW_{CO_2}}{R \times T}$$

m is equal to the amount (g) of dry ice, P is equal to the atmospheric pressure (1 atm), V is equal to the volume (L) of the silicone container, and $MW_{CO_2}$ is equal to the molar mass of carbon dioxide (44 g/mol), R is equal to the gas constant (0.082 L·atm/K·mol), and T is equal to the ambient absolute temperature (K).

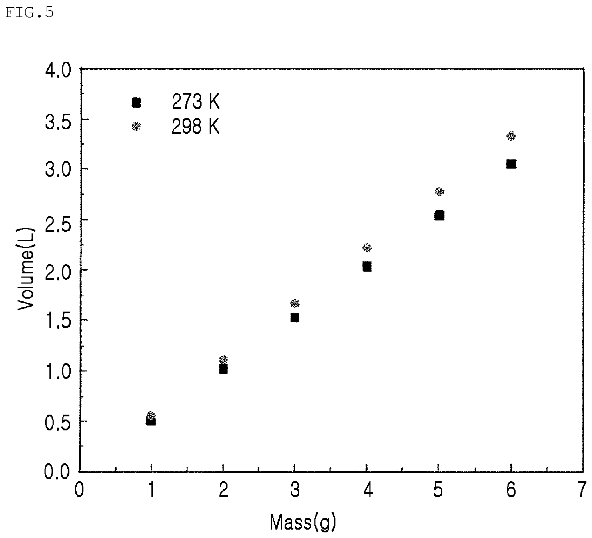

FIG. 5 is a theoretical graph showing the volume of gas generated by sublimation of dry ice according to the temperature based on the ideal gas equation according to an embodiment of the present disclosure.

Referring to FIG. 5, at 273 K, when 1 g of dry ice is put into in the main body part 10, the dry ice occupies a volume of approximately 0.51 L, and when 5 g of dry ice is put into, the dry ice occupies a volume of approximately 2.54 L. Assuming that the ambient temperature of the body portion 10 is 298 K, when 1 g of dry ice is put into the main body part 10, the dry ice occupies a volume of approximately 0.56 L, and when 5 g of dry ice is put into the main body part 10, the dry ice occupies a volume of approximately 2.78 L.

As described above, the amount of dry ice may be adjusted according to the volume of a storage container to ensure safety required for road transport, and as the sublimation speed of dry ice may vary depending on the ambient temperature, if it is necessary to partially adjust the amount of dry ice, the appropriate amount may be adjusted in consideration of the ideal gas equation presented above and the maximum sublimation rate of dry ice of 3 g/min.

The amount of dry ice determined according to the ideal gas equation as described above may further increase depending on the transport time. In this context, according to another embodiment, prior to the step S20, a step of calculating an appropriate amount of dry ice depending on the travel time on the basis of a weight loss rate of the dry ice over time may be further included.

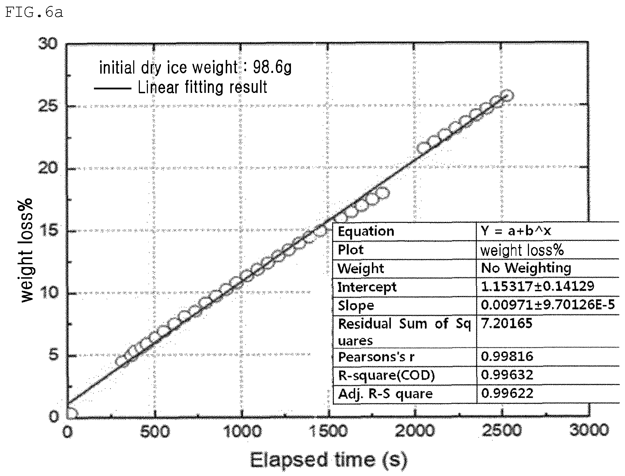

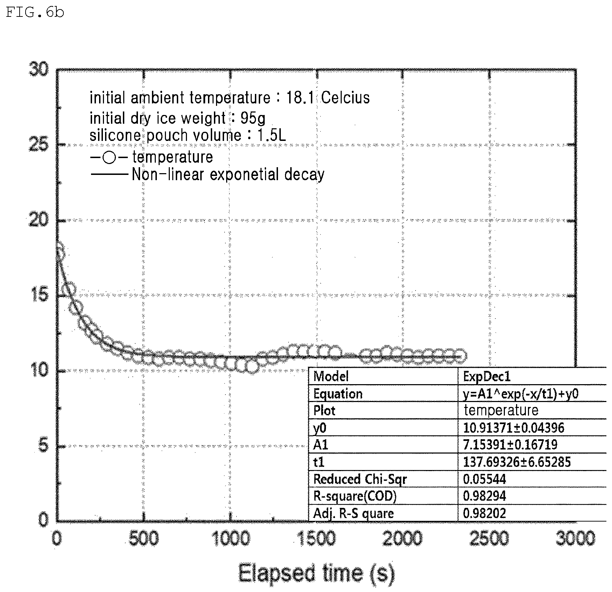

FIGS. 6a and 6b are graphs of actual measurement results of measuring the weight change rate of dry ice and the temperature change in the storage container according to the embodiment of the present disclosure.

Referring to FIGS. 6a and 6b, from the weight of the initial dry ice of 98.6 g to the ambient temperature of 18.1 °C, the weight loss of linear behavior is achieved, and as a result of linear fitting, the weight loss % was shown as [Equation 2] with time (s), and the appropriate amount of dry ice depending on the travel time may be predicted.

[Equation 2]

weight loss%=1.153+0.097×time(seconds)

Furthermore, as shown in FIGS. 6a and 6b of this embodiment, as a result of putting 95 g of dry ice in a 1.5 L silicone storage pouch and measuring the temperature in real time using a thermocouple, it can be seen that the temperature continuously decreases from the initial ambient temperature of 18.1 °C for 500 seconds and is maintained at about 10.8 °C while balancing with the ambient temperature while dry ice exists. From the result, it can be said that the time point at which the amount of gas generation of CO2, the dilution of oxygen, and the temperature in the 1.5 L container are balanced is approximately 500 seconds. This means that the temperature inside the container may actually drop to about -10 °C compared to the ambient temperature, and it is judged that approximately 140 g of dry ice is required to transport a 1.5 L storage pouch for 4 hours.

Although the above has been described with reference to preferred embodiments of the present invention, it should be understood that those skilled in the art may variously modify and change the present disclosure without departing from the scope of the present invention which is solely defined by the appended claims.

**Claims**

1. A storage device (100) for a lithium-ion waste secondary battery (40); the storage device comprising:

   a main body part (10) having an opening (11) on at least one side thereof and including a space portion (12) in which contents may be accommodated;
   an opening and closing part (20) configured to open and close the opening of the main body part;

a one-way valve (30) installed on at least one surface of the main body part to discharge internal gas to the outside and prevent external gas from flowing inside;

dry ice (50); **characterized in that**

the main body part is made of a silicone based material; and **in that** the main body part comprises

a dry ice storage part (60) configured to store the dry ice, the dry ice storage part being made of a porous and flame-retardant material.

2. The storage device of claim 1, wherein the main body part (10), made of a silicone-based material, is made of a flame-retardant soft or hard material made using a silicone resin or a copolymer of a silicone resin and another synthetic resin.

3. The storage device of claim 1, wherein the opening and closing part (20) is installed to an end of the opening or is spaced apart from the end of the opening by a predetermined distance to be installed on the main body part (10) .

4. The storage device of claim 1, wherein the opening and closing part (20) is a zipper.

5. The storage device of claim 1, wherein the one-way valve (30) is installed on the surface of the main body part (10) at a position that does not come into contact with the dry ice storage part (60).

6. The storage device of claim 1, wherein the dry ice storage part (60) is separately put into the space portion (12) of the main body part independently of the main body part, or is installed on an inner surface of the main body part.

7. The storage device of claim 1, wherein the one-way valve (30) is positioned in an upper region of the main body part while the dry ice storage part (60) is positioned in a lower region of the main body part.

8. The storage device of claim 1, wherein the dry ice storage part (60) includes at least one flame-retardant fiber selected from meta-aramid and para-aramid fibers.

9. A method for storing and transporting a lithium-ion waste secondary battery (40) the method comprising:

preparing the storage device (100) for a lithium-ion waste secondary battery according to claim 1;
inserting a lithium-ion waste secondary battery into the storage device; and
locking the opening and closing part (20) of the storage device.

10. The method of claim 9, further comprising:
calculating an appropriate amount of dry ice according to travel time on the basis of a weight loss rate of dry ice over time.

11. The method of claim 9, further comprising:
putting the storage device for a lithium-ion waste secondary battery, in which a lithium-ion waste secondary battery is inserted and the opening and closing part (20) thereof is locked, into a hard case storage box.

**Patentansprüche**

1. Aufbewahrungsvorrichtung (100) für eine gebrauchte Lithium-Ionen-Sekundärbatterie (40), wobei die Aufbewahrungsvorrichtung umfasst:

einen Hauptkörperteil (10) mit einer Öffnung (11) an mindestens einer Seite desselben und mit einem Raumabschnitt (12), in dem Inhalte untergebracht werden können;
ein Öffnungs- und Schließteil (20), das so ausgebildet ist, dass es die Öffnung des Hauptkörperteils öffnet und schließt;
ein Einwegventil (30), das an mindestens einer Oberfläche des Hauptkörperteils angebracht ist, um internes Gas nach außen abzulassen und zu verhindern, dass externes Gas nach innen strömt;
Trockeneis (50);
**dadurch gekennzeichnet, dass**
der Hauptkörperteil aus einem Material auf Silikonbasis besteht; und dass der Hauptkörperteil einen Trockeneisaufbewahrungsteil (60) umfasst, der zum Aufbewahren des Trockeneises ausgebildet ist, wobei der Trockeneisaufbewahrungsteil aus einem porösen und flammhemmenden Material besteht.

2. Aufbewahrungsvorrichtung nach Anspruch 1, wobei das Hauptkörperteil (10), das aus einem Material auf Silikonbasis besteht, aus einem flammhemmenden weichen oder harten Material hergestellt ist, das unter Verwendung eines Silikonharzes oder eines Copolymers aus einem Silikonharz und einem anderen synthetischen Harz hergestellt wurde.

3. Die Aufbewahrungsvorrichtung nach Anspruch 1, wobei der Öffnungs- und Schließteil (20) an einem Ende der Öffnung angebracht ist oder in einem vorbestimmten Abstand vom Ende der Öffnung angeordnet ist, um am Hauptkörperteil (10) angebracht zu werden.

4. Aufbewahrungsvorrichtung nach Anspruch 1, wobei der Öffnungs- und Schließteil (20) ein Reißverschluss ist.

5. Aufbewahrungsvorrichtung nach Anspruch 1, wobei das Einwegventil (30) an der Oberfläche des Hauptkörperteils (10) an einer Stelle angebracht ist, die nicht mit dem Trockeneisaufbewahrungsteil (60) in Kontakt kommt.

6. Aufbewahrungsvorrichtung nach Anspruch 1, wobei der Trockeneisaufbewahrungsteil (60) unabhängig vom Hauptkörperteil separat in den Raumabschnitt (12) des Hauptkörperteils eingesetzt oder an einer Innenfläche des Hauptkörperteils angebracht ist.

7. Die Aufbewahrungsvorrichtung nach Anspruch 1, wobei das Einwegventil (30) in einem oberen Bereich des Hauptkörperteil angeordnet ist, während der Trockeneisaufbewahrungsteil (60) in einem unteren Bereich des Hauptkörperteils angeordnet ist.

8. Die Aufbewahrungsvorrichtung nach Anspruch 1, wobei der Trockeneisaufbewahrungsteil (60) mindestens eine flammhemmende Faser umfasst, die aus Meta-Aramid- und Para-Aramid-Fasern ausgewählt ist.

9. Verfahren zum Aufbewahren und Transportieren einer gebrauchten Lithium-Ionen-Sekundärbatterie (40), wobei das Verfahren umfasst:

   Vorbereiten der Aufbewahrungsvorrichtung (100) für eine gebrauchte Lithium-Ionen-Sekundärbatterie gemäß Anspruch 1;
   Einlegen einer gebrauchten Lithium-Ionen-Sekundärbatterie in die Aufbewahrungsvorrichtung; und
   Verriegeln des Öffnungs- und Schließteils (20) der Aufbewahrungsvorrichtung.

10. Verfahren nach Anspruch 9, das ferner umfasst:
    Berechnen einer geeigneten Menge an Trockeneis entsprechend der Transportzeit auf der Grundlage einer Gewichtsabnahmerate von Trockeneis im Laufe der Zeit.

11. Verfahren nach Anspruch 9, das ferner umfasst:
    Einsetzen der Aufbewahrungsvorrichtung für eine gebrauchte Lithium-Ionen-Sekundärbatterie, in die eine gebrauchte Lithium-Ionen-Sekundärbatterie eingelegt wurde und deren Öffnungs- und Schließteil (20) verriegelt wurde, in eine Hartschalenaufbewahrungsbox.

**Revendications**

1. Dispositif de stockage (100) pour une batterie secondaire au lithium-ion usagée (40) ; le dispositif de stockage comprenant :

   une partie de corps principal (10) présentant une ouverture (11) sur au moins un côté de celle-ci et incluant une partie vide (12) dans laquelle un contenu peut être logé ;
   une partie d'ouverture et de fermeture (20) configurée pour ouvrir et fermer l'ouverture de la partie de corps principal ;
   un clapet anti-retour (30) installé sur au moins une surface de la partie de corps principal pour évacuer un gaz interne vers l'extérieur et empêcher l'entrée de gaz externe ;
   de la glace sèche (50) ;
   **caractérisé en ce que**

la partie de corps principal est constituée d'un matériau à base de silicone ; et **en ce que** la partie de corps principal comprend une partie de stockage de glace sèche (60) configurée pour stocker la glace sèche, la partie de stockage de glace sèche étant constituée d'un matériau poreux et ignifuge.

2. Dispositif de stockage selon la revendication 1, dans lequel la partie de corps principal (10), constituée d'un matériau à base de silicone, est constituée d'un matériau ignifuge souple ou dur réalisé à l'aide d'une résine de silicone ou d'un copolymère d'une résine de silicone et d'une autre résine synthétique.

3. Dispositif de stockage selon la revendication 1, dans lequel la partie d'ouverture et de fermeture (20) est installée à une extrémité de l'ouverture ou est espacée de l'extrémité de l'ouverture d'une distance prédéterminée afin d'être installée sur la partie de corps principal (10).

4. Dispositif de stockage selon la revendication 1, dans lequel la partie d'ouverture et de fermeture (20) est une fermeture éclair.

5. Dispositif de stockage selon la revendication 1, dans lequel le clapet anti-retour (30) est installé sur la surface de la partie de corps principal (10) en une position qui n'entre pas en contact avec la partie de stockage de glace sèche (60).

6. Dispositif de stockage selon la revendication 1, dans lequel la partie de stockage de glace sèche (60) est placée séparément dans la partie vide (12) de la partie de corps principal, indépendamment de la partie de corps principal, ou est installée sur une surface interne de la partie de corps principal.

7. Dispositif de stockage selon la revendication 1, dans lequel le clapet anti-retour (30) est positionné dans une région supérieure de la partie de corps principal en même temps que la partie de stockage de glace sèche (60) est positionnée dans une région inférieure de la partie de corps principal.

8. Dispositif de stockage selon la revendication 1, dans lequel la partie de stockage de glace sèche (60) inclut au moins une fibre ignifuge sélectionnée parmi les fibres méta-aramide et para-aramide.

9. Procédé de stockage et de transport d'une batterie secondaire au lithium-ion usagée (40), le procédé comprenant :

la préparation du dispositif de stockage (100) pour une batterie secondaire au lithium-ion usagée selon la revendication 1 ;
l'insertion d'une batterie secondaire au lithium-ion usagée dans le dispositif de stockage ; et
le verrouillage de la partie d'ouverture et de fermeture (20) du dispositif de stockage.

10. Procédé selon la revendication 9, comprenant en outre :
le calcul d'une quantité appropriée de glace sèche en fonction du temps de transport sur la base d'un taux de perte pondérale de glace sèche au fil du temps.

11. Procédé selon la revendication 9, comprenant en outre :
le placement du dispositif de stockage pour une batterie secondaire au lithium-ion usagée, dans lequel une batterie secondaire au lithium-ion usagée est insérée et dont la partie d'ouverture et de fermeture (20) est verrouillée, dans une caisse de stockage rigide.

FIG. 1

FIG.2

FIG.3

FIG.4

| prepare waste secondary battery | S10 |
| :-- | :-- |

↓

| put in dry ice storage part containing dry ice | S20 |
| :-- | :-- |

↓

| put in waste secondary battery | S30 |
| :-- | :-- |

↓

| lock opening and closing part of storage device | S40 |
| :-- | :-- |

↓

| put storage device into hard case storage box | S50 |
| :-- | :-- |

FIG.5

FIG.6a

| Equation | Y = a+b^x |
|---|---|
| Plot | weight loss% |
| Weight | No Weighting |
| Intercept | 1.15317±0.14129 |
| Slope | 0.00971±9.70126E-5 |
| Residual Sum of Squares | 7.20165 |
| Pearsons's r | 0.99816 |
| R-square(COD) | 0.99632 |
| Adj. R-S quare | 0.99622 |

FIG.6b

initial ambient temperature : 18.1 Celcius
initial dry ice weight : 95g
silicone pouch volume : 1.5L
−○− temperature
—— Non-linear exponetial decay

| Model | ExpDec1 |
|---|---|
| Equation | y=A1^exp(-x/t1)+y0 |
| Plot | temperature |
| y0 | 10.91371±0.04396 |
| A1 | 7.15391±0.16719 |
| t1 | 137.69326±6.65285 |
| Reduced Chi-Sqr | 0.05544 |
| R-square(COD) | 0.98294 |
| Adj. R-S quare | 0.98202 |

**REFERENCES CITED IN THE DESCRIPTION**

**Patent documents cited in the description**

• KR 20170039144 A